# EUROPÄISCHE PATENTSCHRIFT

(11) **EP 0 885 494 B1**
(45) Veröffentlichungstag und Bekanntmachung des Hinweises auf die Patenterteilung: **06.06.2001**
(21) Anmeldenummer: 97914161.1
(22) Anmeldetag: 03.03.1997
(51) Int. Cl.: H04B 7/26, H04Q 7/38

(54) **VERFAHREN UND ANORDNUNG ZUM VERBESSERN DES AUSNUTZUNGSGRADES VON TELEKOMMUNIKATIONSKANÄLEN IN ÖRTLICH KONZENTRIERTEN, ASYNCHRONEN, DRAHTLOSEN TELEKOMMUNIKATIONSSYSTEMEN**
PROCESS AND DESIGN FOR IMPROVING THE UTILIZATION RATE OF TELECOMMUNICATIONS CHANNELS IN LOCALLY CONCENTRATED, ASYNCHRONOUS WIRELESS TELECOMMUNICATIONS SYSTEMS
PROCEDE ET DISPOSITIF POUR AMELIORER LE TAUX D'UTILISATION DE VOIES DE TELECOMMUNICATION DANS DES SYSTEMES DE TELECOMMUNICATION SANS FIL, ASYNCHRONES ET LOCALEMENT CONCENTRES

(30) Priorität: 04.03.1996 DE 19608183
(43) Veröffentlichungstag der Anmeldung: 23.12.1998
(73) Patentinhaber: SIEMENS AKTIENGESELLSCHAFT, 80333 München (DE)
(72) Erfinder: PILLEKAMP, Klaus-Dieter, D-40699 Erkrath (DE)
(86) Internationale Anmeldenummer: DE9700384
(87) Internationale Veröffentlichungsnummer: WO9733385

(56) Entgegenhaltungen:
- EP-A- 0 399 611
- WO-A-95/07013
- WO-A-95/19071
- GB-A- 2 249 922
- US-A- 5 343 513
- PATENT ABSTRACTS OF JAPAN vol. 017, no. 347 (E-1391), 30.Juni 1993 & JP 05 048521 A (YUSEISHO TSUSHIN SOGO KENKYUSHO), 26.Februar 1993,

## Beschreibung

Die Erfindung bezieht sich auf ein Verfahren zum Verbessern des Ausnutzungsgrades von Telekommunikationskanälen in örtlich konzentrierten, asynchronen, drahtlosen Telekommunikationssystemen gemäß dem Oberbegriff des Patentanspruches 1 und auf eine Anordnung zum Verbessern des Ausnutzungsgrades von Telekommunikationskanälen in örtlich konzentrierten, asynchronen, drahtlosen Telekommunikationssystemen gemäß dem Oberbegriff des Patentanspruches 9.

Drahtlose Telekommunikationssysteme der vorstehend bezeichneten Art sind Nachrichtensysteme mit einer Fernübertragungsstrecke zwischen einer Nachrichtenquelle und einer Nachrichtensenke zur Nachrichtenverarbeitung und Nachrichtenübertragung, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtlos - z.B. nach diversen Funkstandards wie DECT, GSM, WACS oder PACS, IS-54, PHS, PDC etc. - ist (vgl. IEEE Communications Magazine, January 1995, Seiten 50 bis 57; D.D. Falconer et al:"Time Division Multiple Access Methods for Wireless Personal Communications").

"Nachricht" ist ein übergeordneter Begriff, der sowohl für den Sinngehalt (Information) als auch für die physikalische Repräsentation (Signal) steht. Signale können dabei z.B.
(1) Bilder
(2) gesprochene Wörter
(3) geschriebene Wörter
(4) verschlüsselte Wörter oder Bilder
repräsentieren.

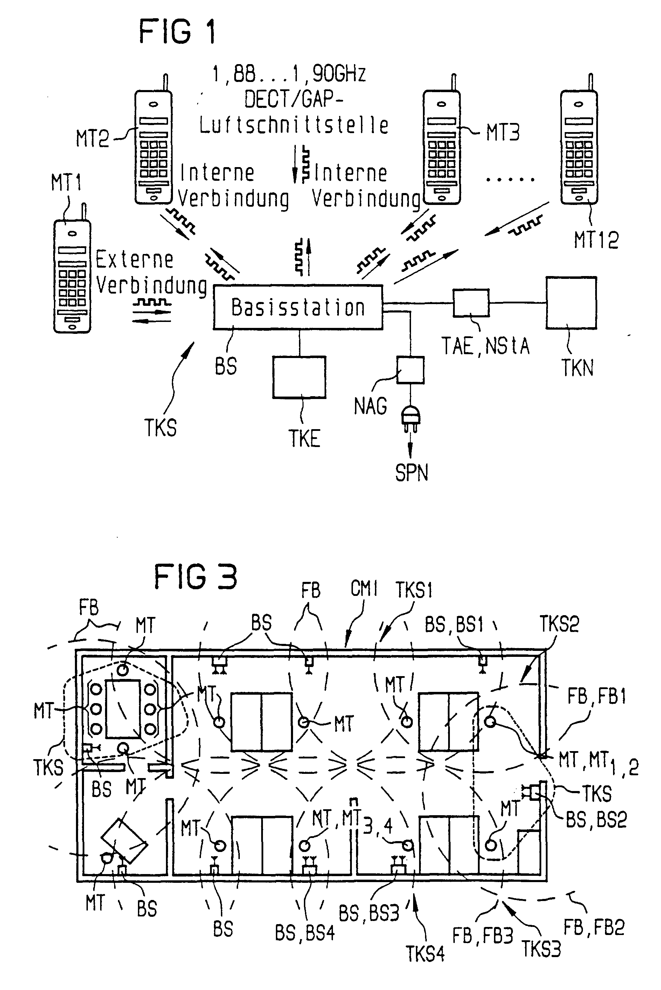

Telekommunikationssysteme der vorstehend umrissenen Art sind beispielsweise DECT-Systeme (**D**igital **E**uropean **C**orless **T**elecommunication; vgl. **(1)**: Nachrichtentechnik Elektronik 42 (1992) Jan./Feb., Nr. 1, Berlin, DE; U. Pilger: "Struktur des DECT-Standards", Seiten 23 bis 29 in **Verbindung mit** ETS 300 175-1...9, Oktober 1992; **(2)**: telcom Report 16 (1993) Nr. 1, J. H. Koch: "Digitaler Komfort für schnurlose Telekommunikation - DECT-Standard eröffnet neue Nutzungsgebiete", Seiten 26 und 27; (3) : tec 2/93 - Das technische Magazin von Ascom "Wege zur universellen mobilen Telekommunikation", Seiten 35 bis 42) oder GAP-Systeme (Generic Access Profile; ETSI-Publikation prETS300444, April 1995, Final Draft, ETSI, FR), die beispielsweise gemäß der Darstellung in FIG 1 aufgebaut sein können.

Nach dem DECT/GAP-Standard können gemäß der Darstellung in FIGUR 1 an einer DECT/GAP-Basisstation BS über eine für den Frequenzbereich zwischen 1,88 und 1,90 GHz ausgelegte DECT/GAP-Luftschnittstelle maximal 12 Verbindungen nach dem TDMA/FDMA/TDD-Verfahren (Time Division Multiple Access/Frequency Division Multiple Access/Time Division Duplex) parallel zu DECT/GAP-Mobilteilen MT1...MT12 aufgebaut werden. Die Zahl 12 ergibt sich aus einer Anzahl "k" von für den Duplex-betrieb eines DECT/GAP-Systems zur Verfügung stehenden Zeitschlitzen bzw. Telekommunikationskanälen (k = 12). Die Verbindung können dabei intern und/oder extern sein. Bei einer internen Verbindung können zwei an der Basisstation BS registrierte Mobilteile, z. B. das Mobilteil MT2 und das Mobilteil MT3, miteinander kommunizieren. Für den Aufbau einer externen Verbindung ist die Basisstation BS mit einem Telekommunikationsnetz TKN, z.B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z. B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. telcom Report 16, (1993) Heft 1, Seiten 26 und 27 - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. telcom Report 16, (1993), Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z. B. das Mobilteil MT12, anstelle des Telekommunikationsendgerätes TKE den zweiten Anschluß für eine externe Verbindung nutzt. Während die Mobilteil MT1...MT12 mit einer Batterie oder einem Akkumulator betrieben werden, ist die als schnurlose Klein-Vermittlungsanlage ausgebildete Basisstation BS über ein Netzanschlußgerät NAG an ein Spannungsnetz SPN angeschlossen.

FIGUR 2 zeigt ausgehend von der Druckschrift Components 31 (1993), Heft 6, Seiten 215 bis 218; S. Althammer, D. Brückmann: "Hochoptimierte IC's für DECT-Schnurlostelefone" den prinzipiellen Schaltungsaufbau der Basisstation BS und des Mobilteils MT. Die Basisstation BS und das Mobilteil MT weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN enthalten. In der Signalverarbeitungseinrichtung SVE ist u.a. eine Kodier-/Dekodiereinrichtung CODEC enthalten. Die Zentrale Steuerung ZST weist sowohl für die Basisstation BS als für das Mobilteil MT einen Mikroprozessor µP mit einem nach dem OSI/ISO-Schichtenmodell aufgebauten Programmodul PGM, einen Signalsteuerungsteil SST und einen Digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten vier Schichten dargestellt. Das Signalsteuerungsteeil SST ist in der Basisstation BS als Time Switch Controller TSC und in dem Mobilteil MT als Burst Mode Controller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt.

Die prinzipielle Funktionsweise der vorstehend aufgeführten Schaltungseinheiten ist beispielsweise in der vorstehend zitierten Druckschrift Components 31 (1993), Heft 6, Seiten 215 bis 218 beschrieben.

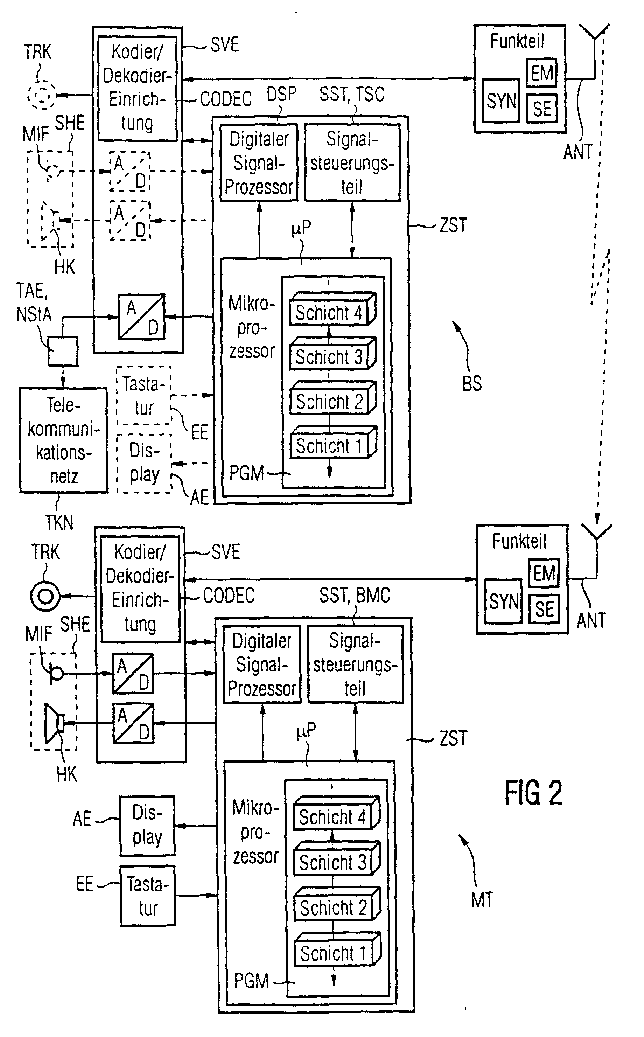

Der beschriebene Schaltungsaufbau nach FIGUR 2 wird bei der Basisstation BS und dem Mobilteil MT gemäß deren Funktion in dem DECT/GAP-System nach FIGUR 1 durch zusätzliche Funktionseinheiten ergänzt.

Die Basisstation BS ist über die Signalverarbeitungseinrichtung SVE und der Telekommunikationsanschlußeinheit TAE bzw. der Nebenstellenanlage NStA mit dem Telekommunikationsnetz TKN verbunden. Als Option kann die Basisstation BS noch eine Bedienoberfläche aufweisen (in FIGUR 2 gestrichelt eingezeichnete Funktionseinheiten), die z.B. aus einer als Tastatur ausgebildeten Eingabeeinrichtung EE, einer als Display ausgebildeten Anzeigeeinrichtung AE, einer als Handapparat mit Mikrofon MIF und Hörkapsel HK ausgebildeten Sprech/Höreinrichtung SHE sowie einer Tonrufklingel TRK betsteht.

Das Mobilteil MT weist die bei der Basisstation BS als Option mögliche Bedienoberfläche mit den zu dieser Bedienoberfläche gehörenden vorstehend beschriebenen Bedienelementen auf.

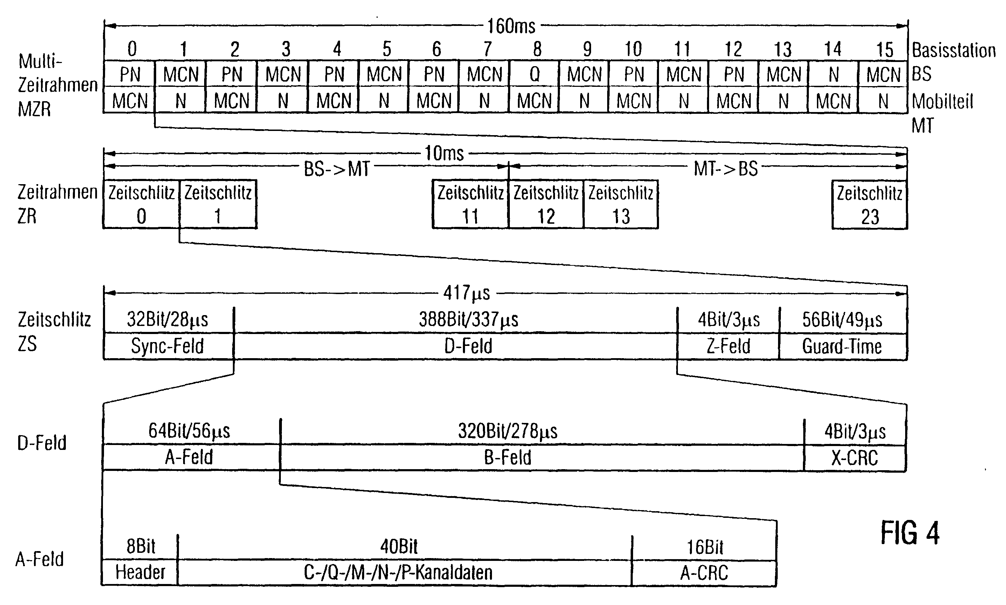

FIGUR 3 zeigt ein zellulares DECT/GAP-Multisystem CMI (Cordless Multicell Integration), bei dem - wie eingangs vorausgesetzt - mehrere der vorstehend beschriebenen DECT/GAP-Systeme TKS mit jeweils einer Basisstation BS und einem/mehreren Mobilteil/en MT an einen beliebigen geographischen Ort, z.B. in einem Verwaltungsgebäude mit großräumigen Etagenbüros, konzentriert - im Sinne einer "Hot Spot"-Anordnung - vorhanden sind. Statt eines "geschlossenen" geographischen Ortes, wie das Verwaltungsgebäude, ist aber auch ein "offener" geographischer Ort mit strategischer Telekommunikationsbedeutung, z.B. Plätze in Großstädten mit einem hohen Verkehrsaufkommen, einer großen Ansammlung von Gewerbeeinheiten und einer großen Bewegung von Menschen, für die Installation eines zellularen DECT/GAP-Multisystems CMI möglich. Ein Teil der in dem Großraumbüro angeordneten Basisstationen BS sind dabei im Unterschied zu den in den FIGUREN 1 und 2 gezeigten Basisstationen gemäß der WO94/10764 als Antenna Diversity-Basisstationen ausgebildet. Die Konzentration der DECT/GAP-Systeme TKS ist dabei so ausgeprägt (lückenlose Funkabdeckung des geographischen Ortes), daß einzelne DECT/GAP-Systeme TKS durch die sich überlappenden zellularen DECT/GAP-Funkbereiche FB in der gleichen Umgebung arbeiten.

Gleiche Umgebung kann dabei je nach Überlappungsgrad bedeuten, daß
a) eine erste Basisstation BS1 eines ersten Telekommunikationssystems TKS1 in einem ersten Funkbereich FB1 und eine zweite Basisstation BS2 eines zweiten Telekommunikationssystems TKS2 in einem zweiten Funkbereich FB2 angeordnet sind und Telekommunikationsverbindungen zu mindestens einem Mobilteil MT_{1,2} aufbauen können,
b) eine dritte Basisstation BS3 eines dritten Telekommunikationssystems TKS3 und eine vierte Basisstation BS4 eines vierten Telekommunikationssystems TKS4 in einem gemeinsamen dritten Funkbereich FB3 angeordnet sind und Telekommunikationsverbindungen zu mindestens einem Mobilteil MT_{3,4} aufbauen können.

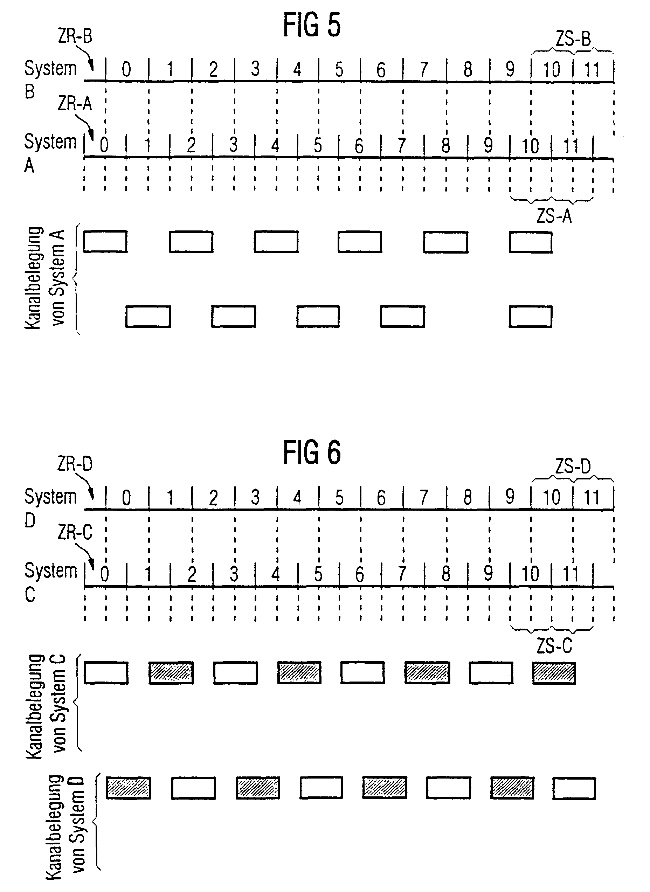

Sind die DECT/GAP-Systeme TKS in dem Großraumbüro - wie eingangs vorausgesetzt - asynchron, d. h. sind die Basisstationen BS nicht synchronisiert, so laufen die Zeitbasen dieser Telekommunikationssysteme TKS innerhalb kurzer Zeit auseinander. Welche Auswirkung dies letztlich auf die in dem System verfügbaren Kanäle und somit auf die Frequenzeffizienz des Systems haben kann, wird anhand der FIGUREN 5 und 6 erläutert.

FIGUR 4 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT/GAP-Systems TKS. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,9 GHz Funknachrichten nach dem TDMA-Prinzip gemäß FIGUR 4 in einer vorgegebenen zeitlichen Abfolge von der Basisstation BS zum Mobilteil MT und vom Mobilteil MT zur Basisstation BS (Duplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation BS und Mobilteil MT getrennt Informationen übertragen, die einen im DECT-Standard definierten C-,M-,N-,P-,Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation BS → Mobilteil MT" und weitere 12 Zeitschlitze ZS (Zeitschlitze 12 ... 23) für die Übertragungsrichtung "Mobilteil MT → Basisstation BS" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

FIGUR 5 zeigt in Anlehnung an die FIGUREN 3 und 4 zwei gegeneinander beliebig versetzte Zeitrahmen ZR-A, ZR-B und Zeitschlitze ZS-A, ZS-B für die Übertragungsrichtung "Basisstation BS → Mobilteil MT" von zwei DECT/GAP-Systemen "A", "B", die in der gleichen Umgebung eines zellularen DECT/GAP-Multisystems arbeiten. Die Zeitrahmen ZR-A, ZR- B und Zeitschlitze ZS-A, ZS-B der beiden Systeme "A", "B" sind derart gegeneinander versetzt, daß ein von dem System "A" belegter Zeitschlitz ZS-A zwei Positionen für potentielle Zeitschlitze ZS-B des Systems "B" blockiert. Dies kann im schlimmsten Fall (worst case) dazu führen, daß - wenn das System "A" bereits 50 % seiner Kanäle; d. h. sechs Zeitschlitze von den insgesamt zur Verfügung stehenden 12 Zeitschlitzen; z.B. gemäß der oberen Rechteckdarstellung in FIGUR 5 belegt hat, bevor das System "B" versucht, seinen ersten Kanal zu belegen - das System "B" keinen freien Kanal (Zeitschlitz) mehr findet. Dieser Fall ist jedoch für die Praxis eher unrealistisch, weil dies bedeuten würde, daß das System "B" so gut wie kein Aufkommen an Funkverkehr hat, wenn bereits vor der ersten Kanalbelegung im System "B" das System "A" bereits 50 % seiner Kanäle belegt hat.

Eine wesentlich praxisnähere Situation zeigt - in Anlehnung an die FIGUREN 3 und 4 - die FIGUR 6. Wie bei FIGUR 5 sind wiederum zwei DECT/GAP-Systeme "C", "D" in einem zellularen DECT/GAP-Multisystem derart angeordnet, daß die beiden Systeme "C", "D" in der gleichen Umgebung arbeiten und daß aufgrund der fehlenden Synchronisation der in diesen Systemen vorhandenen Basisstationen Zeitrahmen ZR-C, ZR-D und Zeitschlitze ZS-C, ZS-D auseinanderlaufen. Im Unterschied zu der Situation in FIGUR 5 wird nun der praxisnähere Fall angenommen, daß sich das Aufkommen an Funkverkehr gleichmäßig auf die beiden Systeme "C", "D" verteilt und die Belegung der Kanäle - im Unterschied zu der Situation in FIGUR 5 - abwechselnd durch die beiden Systeme erfolgt. Erfolgt die Kanalbelegung (Zeitschlitzbelegung) durch die beiden Systeme "C", "D" gemäß der Darstellung der dunklen Rechtecke in FIGUR 6, so ergibt sich eine Anzahl von insgesamt acht Kanälen (Zeitschlitzen), die von den beiden Systemen belegt werden können. Die Ausbeute an belegten Kanälen ist dabei gegenüber synchronisierten DECT/GAP-Systemen "C", "D" um ein Drittel geringer.

Diese gegenüber vergleichbaren synchronisierten Systemen geringer ausfallende Kanalausbeute ist ein Grund für die Forderung, daß bei einer örtlichen Konzentration von drahtlosen Telekommunikationssystemen, z. B. DECT/GAP-Systemen gemäß den FIGUREN 1 und 2 die Basisstationen dieser Systeme synchronisiert sein müssen.

Die Forderung nach synchronisierten Basisstationen innerhalb eines zellularen DECT/GAP-Multisystems nach FIGUR 3 wird außerdem dadurch begründet, daß für den Betrieb des zellularen DECT/GAP-Multisystems- im Sinne einer mobilen Telekommunikation - in Analogie zum zellularen Mobilfunksystem - z. B. nach dem GSM-Standard (**G**roupe **S**pécicale **M**obile oder **G**lobal **S**ystem for **M**obile Communication; vgl. Informatik Spektrum 14 (1991) Juni, Nr. 3, Berlin, DE; A. Mann: "Der GSM-Standard - Grundlage für digitale europäische Mobilfunknetze", Seiten 137 bis 152) - die Realisierung systemspezifischer Leistungsmerkmale, wie "Roaming (mit einem Mobilteil durch den zellularen Multifunkbereich wandern), Handover (Weiterreichen einer Duplex-Funkverbindung "Basisstation" ↔ "Mobilteil" innerhalb eines Funkbereiches/einer Zelle (Intra-Cell Handover) und im Überschneidungsbereich (Überlappungsbereich) von zwei Funkbereichen/Funkzellen (Inter-Cell Handover), vorausgesetzt wird. Dafür ist eine entsprechende Koordination der in dem DECT/GAP-System nach den FIGUREN 1 und 2 ablaufenden Funktionsabläufe erforderlich. Um hierbei weitestgehend auf eine Koordination von außen, d. h. von dem leitungsgebundenen öffentlichen Telefonnetz verzichten zu können, ist gemäß dem DECT-Standard das Dynamic Channel Allocation-Verfahren (DCA-Verfahren) vorgesehen. Wenn z. B. eine DECT-Verbindung aufgebaut wird, wird diejenige Frequenz und dasjenige Zeitfenster mit der geringsten Interferenz gesucht. Die Höhe (Stärke) der Interferenz hängt vorrangig davon ab, ob
(a) bereits an einer anderen Basisstation ein Gespräch geführt wird oder
(b) ein Mobilteil durch Bewegung in Sichtkontakt mit einer zuvor abgeschatteten Basisstation kommt.

Eine sich hieraus ergebende Erhöhung der Interferenz kann mit dem dem DECT/GAP-System zugrundegelegten TDMA-Übertragungsverfahren (**T**ime **D**ivision **M**ultiple **A**ccess) begegnet werden. Nach dem TDMA-Verfahren wird lediglich ein Zeitschlitz für die eigentliche Übertragung gebraucht; die übrigen elf Zeitschlitze können für Messungen verwendet werden. Dadurch kann ein alternatives Frequenz/Zeitschlitzpaar ermittelt werden, auf das die Verbindung umgeschaltet werden kann. Dies geschieht im Rahmen einer adaptiven Kanalzuweisung gemäß dem DECT-Standard (vgl. Nachrichtentechnik Elektronik 42 (1992) Jan./Feb., Nr. 1, Berlin; U. Pilger: "Struktur des DECT-Standards", Seite 28 Kap.3.2.6) durch ein "Connection Handover" (Intra-Cell Handover).

Um nun neben dem "Intra-Cell Handover" insbesondere das bei zellularen DECT-Systemen regelmäßig auftretende "Inter-Cell Handover"-Problem in den Begriff zu bekommen, muß das für solche zellularen DECT/GAP-Systeme vorgesehene Mobilteil zu jedem Zeitpunkt einer aktiven Telekommunikationsverbindung zu einer Basisstation in der Lage sein, bedingt durch einen Funkbereichswechsel/Zellenwechsel innerhalb des Multi-Funkbereichs die Basisstation zu wechseln (Aufbau einer Telekommunikationsverbindung zu einer anderen Basisstation, wenn das Mobilteil sich in einem Überschneidungsbereich von zwei Funkbereichen/Funkzellen befindet) und dabei die bereits bestehende aktive Telekommunikationsverbindung unterbrechungsfrei (seamless) an die Basisstation weiterzureichen (seamless Handover).

Der DECT-Standard sieht hierfür gemäß der Druckschrift Nachrichtentechnik Elektronik 42 (1992) Jan./Feb., Nr. 1, Berlin; U. Pilger: "Struktur des DECT-Standards", Seite 28 Kap.3.2.6 vor, daß das Mobilteil selbständig bei einer Verschlechterung der Übertragungsqualität der bestehenden Telekommunikationsverbindung aufgrund von die Übertragungsqualität angebenden Indikatoren (z. B. Signalfeldstärke, CRC-Werte etc.) parallel zu der bestehenden Verbindung eine zweite Telekommunikationsverbindung aufbaut. Bei dieser "Inter-Cell Handover"-Prozedur wird die Tatsache, das Mobilteil im Rahmen der dynamischen, dezentralisierten Kanalzuweisung (DCA-Verfahren) ständig über den Status der in der momentanen Umgebung verfügbaren Kanäle informiert sind, derart ausgenutzt, daß die zweite Verbindung aufgrund des Eintrages in eine Kanalliste aufgebaut wird.

Ein unterbrechungsfreies Handover ist mit der vorstehenden Prozedur nur dann möglich, wenn das Mobilteil sich in einem DECT/GAP-Multisystem mit synchronisierten Basisstationen befindet. In einem solchen synchronen zellularen System kann das Mobilteil dann zusätzlich zu der bereits bestehenden Telekommunikationsverbindung zu einer Basisstation (Ursprungs-Basisstation) mindestens eine weitere Verbindung zu einer anderen Basisstation aufbauen, ohne dabei die Synchronität zur Ursprungs-Basisstation zu verlieren.

Ein solches synchrones zellulares DECT/GAP-Multisystem kann gemäß der Druckschrift ntz Bd.48 (1995), Heft 1, Seiten 47-49 "DECT-Technik für den europäischen Markt" durch eine zusätzliche Drahtverbindung zwischen den Basisstationen realisiert werden (vgl. vorstehend genannte Druckschrift Seite 48 letzter Absatz bis Seite 49 erster Absatz und Bild 2).

Darüber hinaus ist es gemäß der nachveröffentlichten deutschen Patentanmeldung DE-A-19 536 587 möglich, ein zellulares DECT/GAP-Multisystem mit Hilfe von über Funk empfangenen Zeitzeicheninformationen, z.B. das DCF77-Signal, zu synchronisieren (vgl. Patentanspruch 1 in Verbindung mit der Beschreibung der FIGUR 3).

Außerdem ist es gemäß der nachveröffentlichten deutschen Patentanmeldung P 195 19 966.9 möglich, ein zellulares DECT/GAP-Multisystem, das über einen S₀-Bus mit einem Vermittlungssystem (z.B. PABX, DOVst) verbunden ist, mit Hilfe des S₀-Bus zu synchronisieren (vgl. Patentanspruch 1 in Verbindung mit den FIGUREN 2 und 3). Diese Methode kann darüber hinaus mit der vorstehend genannten Zeitzeicheninformations-Methode kombiniert werden (vgl. Patentanspruch 2 in Verbindung mit der Beschreibung der FIGUR 3 in der nachveröffentlichten deutschen Patentanmeldung DE-A-19 536 587.

Bei all den vorstehend genannten Methoden zur Synchronisation eines zellularen DECT/GAP-Multisystems ist entweder zusätzlicher Aufwand im Funkteil der Basisstationen in den DECT/GAP-Systemem zum Empfangen der Zeitzeicheninformation oder zusätzlicher Systemaufwand bei der Synchronisation über den S₀-Bus erforderlich.

Aus der GB-A-2 249 922 ist eine Methode zur Kanalzuweisung in einem asynchronen, drahtlosen FDMA/TDMA Telekommunikationssystem bekannt, bei dem die eigene Basisstation von einer anderen Basisstation mit unabhängiger Synchronisierung Signale auf der gleichen Frequenz, jedoch unterschiedliche Zeitschlitze benutzend, empfängt, wobei die Zeitdifferenz zwischen dem Zeitschlitz der anderen Basisstation und dem Zeitschlitz der eigenen Baisstation gemessen wird und auf der Basis dieser Zeitdifferenz die Chance für eine Kollision abheschätzt sowie in Abhängigkeit davon ein Übergang zu einem freien Kanal durchgeführt wird.

Die der Erfindung zugrundeliegende Aufgabe besteht darin, den bei dem (vorstehend dargelegten) Stand der Technik erforderlichen Synchronisationsaufwand für örtlich konzentrierte asynchrone drahtlose Telekommunikationssysteme zu vermeiden.

Diese Aufgabe wird
1) ausgehend von dem in dem Oberbegriff des Patentanspruches 1 definierten Verfahren durch die in dem Kennzeichen des Patentanspruches 1 angegebenen Merkmale und
2) ausgehend von der in dem Oberbegriff des Patentanspruches 9 definierten Anordnung durch die in dem Kennzeichen des Patentanspruches 9 angegebenen Merkmale gelöst.

Die der Erfindung zugrundeliegende Idee besteht darin, daß die an einem geographischen Ort (z.B. "geschlossener" oder "offnener" Ort) konzentrierten und in gleicher Umgebung arbeitenden, drahtlosen, asynchronen Telekommunikationssysteme der in der Beschreibungseinleitung umrissenen bzw. angegebenen Art
1) für eine erste in dem jeweiligen Telekommunikationssystem nach einer hybriden das FDMA-Prinzip enthaltenden Vielfachzugriffsmethode aufzubauende Telekommunikationsverbindung einschließlich einer ggf. - wie im DECT-Standard (vgl. ETS 300 175-3; October 1992; Kap. 5.5 und 5.7) - vorgesehenen "Dummy Bearer"-Telekommunikationsverbindung mit Priorität eine freie, noch nicht belegte FDMA-Frequenz belegen
2) für alle weiteren in dem jeweiligen Telekommunikationssystem der ersten Telekommunikationsverbindung nachfolgenden Telekommunikationsverbindungen einschließlich Handover-Telekommunikationsverbindungen mit Priorität auf der gleichen FDMA-Frequenz aufgebaut werden.

Folgen alle Telekommunikationssysteme diesem Algorithmus/Verfahren, so wird jeweils eine FDMA-Frequenz nur von einem Telekommunikationssystem belegt (optimale Kanalausnutzung und größtmögliche Frequenzeffizienz), womit gleichzeitig in bezug auf diese Frequenz eine Synchronisation erfolgt ist.

Die Erfindung betrifft generell alle örtlich konzentrierten, asynchronen drahtlosen Telekommunikationssysteme mit den in der Beschreibungseinleitung angegebenen Eigenschaften und Ausprägungen, bei denen durch das drahtlose Übertragen von Telekommunikationssignalen nach einer hybriden das FDMA-Prinzip enthaltenden Vielfachzugriffsmethode drahtlose Telekommunikationsverbindungen aufgebaut werden. Zu diesen genannten Telekommunikationssystemen gehören somit auch z.B. die im Rahmen einer universellen Mobiltelekommunikation häufig als dritte Systemgeneration bezeichneten, wahrscheinlich auf den FDMA-,TDMA- und CDMA-Prinzipien beruhenden Systeme.

Weitere vorteilhafte Weiterbildungen der Erfindung sind in den Unteransprüchen angegeben.

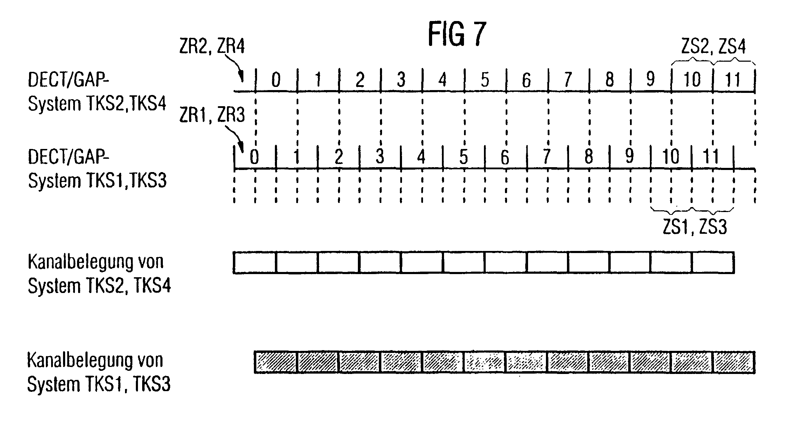

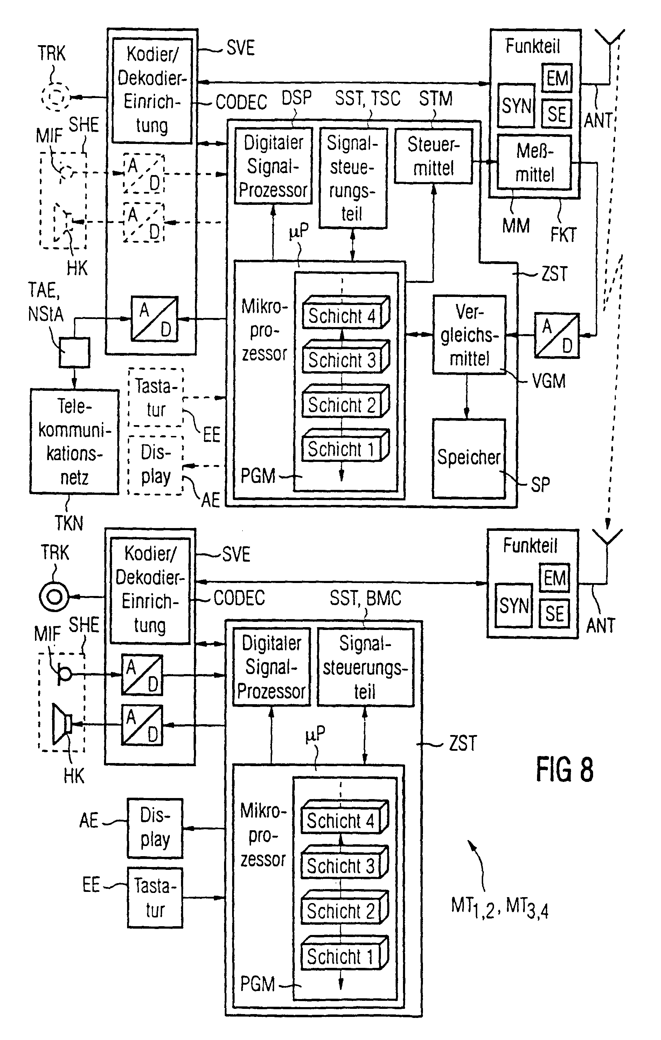

Ein Ausführungsbeispiel der Erfindung wird anhand der FIGUREN 7 und 8 erläutert. Es zeigen
FIGUR 7 die Kanalbelegung von zwei in der gleichen Umgebung eines DECT/GAP-Multisystems arbeitenden DECT/GAP-Systemen,
FIGUR 8 den prinzipiellen Schaltungsaufbau von DECT/GAP-Basisstation und DECT/GAP-Mobilteil der DECT/GAP-Systeme nach FIGUR 7.

FIGUR 7 zeigt ausgehend von den FIGUREN 3 bis 6 zwei gegeneinander beliebig versetzte Zeitrahmen ZR1, ZR2 bzw. ZR3, ZR4 und Zeitschlitze ZS1, ZS2 bzw. ZS3, ZS4 für die Übertragungsrichtung "Basisstation → Mobilteil" von den zwei DECT/GAP-Systemen TKS1, TKS2 bzw. TKS3, TKS4 nach FIGUR 3, die in der gleichen Umgebung des zellularen DECT/GAP-Multisystems arbeiten. Die Zeitrahmen ZR1, ZR2 bzw. ZR3, ZR4 und Zeitschlitze ZS1, ZS2 bzw. ZS3, ZS4 der beiden Systeme TKS1, TKS2 bzw. TKS3, TKS4 sind derart gegeneinander versetzt, daß ein von dem System TKS1 bzw. TKS3 belegter Zeitschlitz ZS1 bzw. ZS3 zwei Positionen für potentielle Zeitschlitze ZS2 bzw. ZS4 des Systems TKS2 bzw. TKS4 blockiert.

Um dieses zu verhindern, laufen in den Basisstationen BS1, BS2 bzw. BS3, BS4 der DECT/GAP-Systeme TKS1, TKS2 bzw. TKS3, TKS4 folgende Funktionsschritte im Rahmen des basisstationsspezifischen Funktionsablaufes ab.

Zunächst werden vor dem Aufbau der ersten Telekommunikationsverbindung in dem jeweiligen DECT/GAP-System TKS1, TKS2 bzw. TKS3, TKS4 auf durch das FDMA-Prinzip vorgegebenen Frequenzen von DECT/GAP-Telekommunikationssignalen und für eine Zeitdauer von mindestens einem DECT/GAP-Zeitrahmen ZR1, ZR2 bzw. ZR3, ZR4, die im konkreten Fall - nach FIGUR 4 - 10 ms entspricht, die Pegel der DECT/GAP-Signale gemessen. Diese Messung wird in jedem DECT/GAP-System solange durchgeführt, bis eine FDMA-Frequenz gefunden worden ist, auf der kein Zeitschlitz der Zeitschlitze ZS1, ZS2 bzw. ZS3, ZS4 belegt ist. Auf einem beliebigen Zeitschlitz dieser FDMA-Frequenz wird dann mit Priorität die erste Telekommunikationsverbindung aufgebaut.

Wird kein "freier" Zeitschlitz ermittelt, dann verhalten sich die DECT/GAP-Systeme wie in den FIGUREN 2 bis 6 dargestellt; d.h. es treten u.U. wieder gegenseitige Kanalblockaden durch die in der gleichen Umgebung arbeitenden DECT/GAP-Systeme auf.

Anschließend werden die Nummer der zu der ersten Telekommunikationsverbindung gehörenden FDMA-Frequenz und die Nummer des zu der ersten Telekommunikationsverbindung gehörenden Zeitschlitzes gespeichert. Danach werden alle weiteren Telekommunikationsverbindungen des jeweilgen DECT/GAP-Systems TKS1, TKS2 bzw. TKS3, TKS4 von der betreffenden Basisstation BS1, BS2 bzw. BS3, BS4 mit Priorität jeweils in weiteren Zeitschlitzen auf der gleichen FDMA-Frequenz aufgebaut.

Nach der gleichen Methode werden die im DECT-Standard definierten "Dummy Bearer" (vgl. ETS 300 175-3, Kap. 5.5 und 5.7; Oktober 1992) positioniert und die Handover-Verbindungen aufbaut.

Mit dieser Methode wird gleichzeitig das Problem reduziert, das dadurch entsteht, daß die Zeitraster der einzelnen DECT/GAP-Systeme aufgrund der fehlenden Synchronisation ihre relative Position zueinander ständig ändern. Diese Drift der einzelnen Zeitbasen führt dazu, daß Zeitschlitze, die beim Verbindungsaufbau "frei" waren, nach einer gewissen Zeit ineinander driften können, was zur Zerstörung der Daten und damit zu Störungen der Übertragung führt.

Folgen alle DECT/GAP-Systeme diesem Algorithmus/dieser Methode, so wird gemäß FIGUR 7 (helle und dunkle Rechtecke) jeweils nur eine FDMA-Frequenz von einem DECT/GAP-System belegt und damit gleichzeitig eine Synchronisation der Zeitschlitze auf dieser Frequenz hergestellt.

FIGUR 8 zeigt ausgehend von FIGUR 2 und unter Berücksichtigung von FIGUR 3 den prinzipiellen zur Durchführung der vorstehend beschriebenen Funktionsschritte modifizierten Schaltungsaufbau der Basisstationen BS1, BS2 bzw. BS3, BS4. Das Funkteil FKT weist zusätzlich zur Messung der Pegel der über die DECT/GAP-Luftschnittstelle ANT, PGM empfangenen DECT/GAP-Trägersignale Meßmittel MM auf. Diese Meßmittel MM sind über einen Analog/Digital-Wandler mit Vergleichsmittel VGM in der- der Zentralen Steuerung ZST verbunden. Die Vergleichsmittel VGM haben eine Verbindung zu einem Speicher SP und zu dem Mikroprozessor µP. Der Mikroprozessor µP hat wiederum über Steuermittel STM der Zentralen Steuerung ZST eine Verbindung zu den Meßmitteln MM in dem Funkteil FKT.

## Patentansprüche

1. Verfahren zum Verbessern des Ausnutzungsgrades von Telekommunikationskanälen in örtlich konzentrierten, asynchronen, drahtlosen Telekommunikationssystemen, insbesondere DECT/GAP-Telekommunikationssystemen, bei dem in den Telekommunikationssystemen durch das drahtlose Übertragen von Telekommunikationssignalen nach einer hybriden das FDMA-Prinzip enthaltenden Vielfachzugriffsmethode drahtlose Telekommunikationsverbindungen zwischen ersten Telekommunikationsgeräten (BS, BS1, BS2, BS3, BS4) und zweiten Telekommunikationsgeräten (MT, MT_{1,2}, MT_{3,4}) aufgebaut werden,
**dadurch gekennzeichnet,** daß
a) vor dem Aufbau von ersten Telekommunikationsverbindungen, auf durch das FDMA-Prinzip vorgegebenen Frequenzen der Telekommunikationssignale und für vorgegebene Zeitrahmen (ZR, ZR1, ZR2, ZR3, ZR4) Pegel der Telekommunikationssignale ermittelt werden,
b) die Pegel solange ermittelt werden, bis auf ersten Frequenzen der Telekommunikationssignale und für erste Zeitrahmen ermittelte erste Pegel vorgegebene Referenzpegel nicht überschreiten,
c) die ersten Telekommunikationsverbindungen mit Priorität auf den ersten Frequenzen der Telekommunikationssignale in den ersten Zeitrahmen aufgebaut werden,
d) die ersten Frequenzen und Informationen über die in den ersten Zeitrahmen aufgebauten ersten Telekommunikationsverbindungen in den ersten Telekommunikationsgeräten gespeichert werden und
e) den ersten Telekommunikationsverbindungen nachfolgende zweite Telekommunikationsverbindungen zwischen den ersten Telekommunikationsgeräten (BS, BS1, BS2, BS3, BS4) und den zweiten Telekommunikationsgeräten (MT, MT_{1,2}, MT_{3,4}) mit Priorität auf den gespeicherten ersten Frequenzen und unter Berücksichtigung der Informationen in den ersten Zeitrahmen aufgebaut werden.

2. Verfahren nach Anspruch 1, **dadurch gekennzeichnet,** daß die hybride das FDMA-Prinzip enthaltende Vielfachzugriffsmethode die TDMA/FDMA-Methode ist, wobei
a) die Zeitrahmen (ZR, ZR1, ZR2, ZR3, ZR4) durch das TDMA-Prinzip in Zeitschlitze (ZS, ZS1, ZS2, ZS3, ZS4) unterteilt werden,
b) die ersten Telekommunikationsverbindungen mit Priorität auf den ersten Frequenzen der Telekommunikationssignale in ersten Zeitschlitzen der ersten Zeitrahmen aufgebaut werden,
c) die den ersten Telekommunikationsverbindungen nachfolgenden zweiten Telekommunikationsverbindungen mit Priorität auf den gespeicherten ersten Frequenzen und in zweiten Zeitschlitzen der ersten Zeitrahmen aufgebaut werden.

3. Verfahren nach Anspruch 1 oder 2, **dadurch gekennzeichnet,** daß die ersten Telekommunikationsverbindungen auf den Frequenzen der Telekommunikationssignale und in den Zeitrahmen aufgebaut werden, wenn keine ersten Frequenzen der Telekommunikationssignale ermittelt werden.

4. Verfahren nach einem der Ansprüche 1 bis 3, **dadurch gekennzeichnet,** daß die Telekommunikationssysteme zu einem "Hot Spot" örtlich konzentriert werden.

5. Verfahren nach einem der Ansprüche 1 bis 4, **dadurch gekennzeichnet,** daß die Telekommunikationssignale "Dummy Bearer"-Informationen enthalten.

6. Verfahren nach einem der Ansprüche 1 bis 4, **dadurch gekennzeichnet**, daß die Telekommunikationssignale "Handover"-Steuerinformationen enthalten.

7. Verfahren nach einem der Ansprüche 1 bis 6, **dadurch gekennzeichnet,** daß die Telekommunikationssysteme DECT/GAP-Telekommunikationssysteme mit DECT/GAP-Basisstationen als erste Telekommunikationsgeräte und DECT/GAP-Mobilteilen als zweite Telekommunikationsgeräte sind.

8. Verfahren nach einem der Ansprüche 1 bis 6, **dadurch gekennzeichnet,** daß die Telekommunikationssysteme GSM-Telekommunikationssysteme mit GSM -Basisstationen als erste Telekommunikationsgeräte und GSM -Mobilteilen als zweite Telekommunikationsgeräte sind.

9. Anordnung zum Verbessern des Ausnutzungsgrades von Telekommunikationskanälen in örtlich konzentrierten, asynchronen, drahtlosen Telekommunikationssystemen, insbesondere DECT/GAP-Telekommunikationssystemen, wobei
a) die Telekommunikationssysteme (TKS, TKS1, TKS2, TKS3, TKS4) erste Telekommunikationsgeräte (BS, BS1, BS2, BS3, BS4) aufweisen, die durch drahtlose Telekommunikation nach nach einer hybriden das FDMA-Prinzip enthaltenden Vielfachzugriffsmethode mit zweiten Telekommunikationsgeräten (MT, MT_{1,2}, MT_{3,4}) der Telekommunikationssysteme verbindbar sind,
b) die ersten Telekommunikationsgeräte (BS, BS1, BS2, BS3, BS4) Sende-/Empfangseinrichtungen (FKT) für Telekommunikationssignale, Luftschnittstellen (PGM, ANT) und Zentrale Steuerungen (ZST) aufweisen, die derart ausgebildet und miteinander verbunden sind, daß durch das drahtlose Übertragen der Telekommunikationssignalen nach der hybriden das FDMA-Prinzip enthaltenden Vielfachzugriffsmethode drahtlose Telekommunikationsverbindungen zu den zweiten Telekommunikationsgeräten (MT, MT_{1,2}, MT_{3,4}) aufgebaut sind,
**dadurch gekennzeichnet,** daß
c) die Sende-/Empfangseinrichtungen (FKT) Meßmittel (MM) aufweisen, die derart ausgebildet sind, daß vor dem Aufbau von ersten Telekommunikationsverbindungen, auf durch das FDMA-Prinzip vorgegebenen Frequenzen der Telekommunikationssignale und für vorgegebene Zeitrahmen (ZR, ZR1, ZR2, ZR3, ZR4) Pegel der Telekommunikationssignale gemessen werden,
d) die Zentralen Steuerungen (ZST) Vergleichsmittel (VGM) aufweisen, die die gemessenen Pegel mit einem vorgegebenen Referenzpegel vergleichen,
e) die Zentralen Steuerungen (ZST) Steuermittel (STM) aufweisen, über die in Abhängigkeit von den Vergleichsergebnissen die Meßmittel (MM) zur Messung der Pegel solange gesteuert werden, bis auf ersten Frequenzen der Telekommunikationssignale und für erste Zeitrahmen gemessene erste Pegel die vorgegebenen Referenzpegel nicht überschreiten,
f) die Sende-/Empfangseinrichtungen (FKT), die Luftschnittstellen (PGM, ANT) und die Zentralen Steuerungen (ZST) derart ausgebildet sind, daß die ersten Telekommunikationsverbindungen mit Priorität auf den ersten Frequenzen der Telekommunikationssignale in den ersten Zeitrahmen aufgebaut werden,
g) die Zentralen Steuerungen (ZST) Speicher (SP) aufweisen, in denen die ersten Frequenzen und Informationen über die in den ersten Zeitrahmen aufgebauten ersten Telekommunikationsverbindung gespeichert werden,
h) die Sende-/Empfangseinrichtungen (FKT), die Luftschnittstellen (PGM, ANT) und die Zentralen Steuerungen (ZST) derart ausgebildet sind, daß den ersten Telekommunikationsverbindungen nachfolgende zweite Telekommunikationsverbindungen zwischen den ersten Telekommunikationsgeräten (BS, BS1, BS2, BS3, BS4) und den zweiten Telekommunikationsgeräten (MT, MT_{1,2}, MT_{3,4}) mit Priorität auf den gespeicherten ersten Frequenzen und unter Berücksichtigung der Informationen in den ersten Zeitrahmen aufgebaut werden.

10. Anordnung nach Anspruch 9, **dadurch gekennzeichnet,** daß die hybride das FDMA-Prinzip enthaltende Vielfachzugriffsmethode die TDMA/FDMA-Methode ist und die die Sende/Empfangseinrichtungen (FKT), die Luftschnittstellen (PGM, ANT) und die Zentralen Steuerungen (ZST) derart ausgebildet sind, daß
a) die Zeitrahmen (ZR, ZR1, ZR2, ZR3, ZR4) durch das TDMA-Prinzip in Zeitschlitze (ZS, ZS1, ZS2, ZS3, ZS4) unterteilt werden,
b) die ersten Telekommunikationsverbindungen mit Priorität auf den ersten Frequenzen der Telekommunikationssignale in ersten Zeitschlitzen der ersten Zeitrahmen aufgebaut werden,
c) die den ersten Telekommunikationsverbindungen nachfolgenden zweiten Telekommunikationsverbindungen mit Priorität auf den gespeicherten ersten Frequenzen und in zweiten Zeitschlitzen der ersten Zeitrahmen aufgebaut werden.

11. Anordnung nach Anspruch 9 oder 10, **dadurch gekennzeichnet,** daß die Sende-/Empfangseinrichtungen (FKT), die Luftschnittstellen (PGM, ANT) und die Zentralen Steuerungen (ZST) derart ausgebildet sind, daß die ersten Telekommunikationsverbindungen auf den Frequenzen der Telekommunikationssignale und in den Zeitschlitzen der Zeitrahmen aufgebaut werden, wenn keine ersten Frequenzen der Telekommunikationssignale vorhanden sind.

12. Anordnung nach einem der Ansprüche 9 bis 11, **dadurch gekennzeichnet**, daß die Telekommunikationssysteme zu einem "Hot Spot" örtlich konzentriert sind.

13. Anordnung nach einem der Ansprüche 9 bis 12, **dadurch gekennzeichnet,** daß die Telekommunikationssignale "Dummy Bearer"-Informationen enthalten.

14. Anordnung nach einem der Ansprüche 9 bis 12, **dadurch gekennzeichnet,** daß die Telekommunikationssignale "Handover"-Steuerinformationen enthalten.

15. Anordnung nach einem der Ansprüche 9 bis 14, **dadurch gekennzeichnet**, daß die Telekommunikationssysteme als DECT/GAP-Telekommunikationssysteme mit DECT/GAP-Basisstationen als erste Telekommunikationsgeräte und DECT/GAP-Mobilteilen als zweite Telekommunikationsgeräte ausgebildet sind.

16. Anordnung nach einem der Ansprüche 9 bis 14, **dadurch gekennzeichnet,** daß die Telekommunikationssysteme als GSM-Telekommunikationssysteme mit GSM -Basisstationen als erste Telekommunikationsgeräte und GSM -Mobilteilen als zweite Telekommunikationsgeräte ausgebildet sind.

## Claims

1. Method for improving the utilization level of telecommunications channels in locally concentrated, asynchronous, wire-free telecommunications systems, in particular DECT/GAP telecommunications systems, in which wire-free telecommunications links are set up between first telecommunications appliances (BS, BS1, BS2, BS3, BS4) and second telecommunications appliances (MT, MT_{1,2}, M_{3,4}) by wire-free transmission of telecommunications signals into the telecommunications systems using a hybrid multiple access method which includes the FDMA principle,
characterized in that
a) before setting up first telecommunications links, telecommunications signal levels are determined at telecommunications signal frequencies predetermined by the FDMA principle and for predetermined time frames (ZR, ZR1, ZR2, ZR3, ZR4),
b) the levels are determined for as long as first levels, which are determined at first telecommunications signal frequencies and for first time frames, do not exceed predetermined reference levels,
c) the first telecommunications links are set up with priority at the first telecommunications signal frequencies in the first time frames,
d) the first frequencies and information about the first telecommunications links set up in the first time frames are stored in the first telecommunications appliances, and
e) second telecommunications links, which follow the first telecommunications links, are set up between the first telecommunications appliances (BS, BS1, BS2, BS3, BS4) and the second telecommunications appliances (MT, MT_{1,2}, MT_{3,4}) with priority at the stored first frequencies and taking account of the information in the first time frames.

2. Method according to Claim 1, characterized in that the hybrid multiple access method which includes the FDMA principle is the TDMA/FDMA method, in which
a) the time frames (ZR, ZR1, ZR2, ZR3, ZR4) are subdivided using the TDMA principle into time slots (ZS, ZS1, ZS2, ZS3, ZS4),
b) the first telecommunications links are set up with priority at the first telecommunications signal frequencies in first time slots in the first time frames,
c) the second telecommunications links, which follow the first telecommunications links, are set up with priority at the stored first frequencies and in second time slots in the first time frames.

3. Method according to Claim 1 or 2, characterized in that the first telecommunications links are set up at the telecommunications signal frequencies and in the time frames, provided that no first telecommunications signal frequencies are determined.

4. Method according to one of Claims 1 to 3, characterized in that the telecommunications systems are concentrated locally to form a "hot spot".

5. Method according to one of Claims 1 to 4, characterized in that the telecommunications signals contain "dummy bearer" information.

6. Method according to one of Claims 1 to 4, characterized in that the telecommunications signals contain "handover" control information.

7. Method according to one of Claims 1 to 6, characterized in that the telecommunications systems are DECT/GAP telecommunications systems with DECT/GAP base stations as first telecommunications appliances, and with DECT/GAP mobile parts as second telecommunications appliances.

8. Method according to one of Claims 1 to 6, characterized in that the telecommunications systems are GSM telecommunications systems with GSM base stations as first telecommunications appliances, and with GSM mobile parts as second telecommunications appliances.

9. Arrangement for improving the utilization level of telecommunications channels in locally concentrated, asynchronous, wire-free telecommunications systems, in particular DECT/GAP telecommunications systems, in which
a) the telecommunications systems (TKS, TKS1, TKS2, TKS3, TKS4) have first telecommunications appliances (BS, BS1, BS2, BS3, BS4) which can be connected to second telecommunications appliances (MT, MT_{1,2}, MT_{3,4}) in the telecommunications systems by wire-free telecommunication using a hybrid multiple access method which includes the FDMA principle,
b) the first telecommunications appliances (BS, BS1, BS2, BS3, BS4) have transmitting/receiving devices (FKT) for telecommunications signals, air interfaces (PGM, ANT) and central controllers (ZST) which are designed and connected to one another in such a way that wire-free telecommunications links are set up to the second telecommunications appliances (MT, MT_{1,2}, MT_{3,4}) by wire-free transmission of the telecommunications signals using the hybrid multiple access method which includes the FDMA principle,
characterized in that
c) the transmitting/receiving devices (FKT) have measurement means (MM) which are designed in such a way that, before setting up the first telecommunications links, the telecommunications signal levels are measured at telecommunications signal frequencies predetermined by the FDMA principle, and for predetermined time frames (ZR, ZR1, ZR2, ZR3, ZR4),
d) the central controllers (ZST) have comparison means (VGM) which compare the measured levels with a predetermined reference level,
e) the central controllers (ZST) have control means (STM) via which the measurement means (MM) for measuring the levels are controlled as a function of the comparison results for as long as first levels, which are measured at first telecommunications signal frequencies and for first time frames, do not exceed the predetermined reference levels,
f) the transmitting/receiving devices (FKT), the air interfaces (PGM, ANT) and the central controllers (ZST) are designed in such a way that the first telecommunications links are set up with priority at the first telecommunications signal frequencies in the first time frames,
g) the central controllers (ZST) have memories (SP) in which the first frequencies and information about the first telecommunications link set up in the first time frames are stored,
h) the transmitting/receiving devices (FKT), the air interfaces (PGM, ANT) and the central controllers (ZST) are designed in such a way that second telecommunications links, which follow the first telecommunications links, are set up between the first telecommunications appliances (BS, BS1, BS2, BS3, BS4) and the second telecommunications appliances (MT, MT_{1,2}, MT_{3,4}) with priority at the stored first frequencies and taking account of the information in the first time frames.

10. Arrangement according to Claim 9, characterized in that the hybrid multiple access method which includes the FDMA principle is the TDMA/FDMA method, and the transmitting/receiving devices (FKT), the air interfaces (PGM, ANT) and the central controllers (ZST) are designed in such a way that
a) the time frames (ZR, ZR1, ZR2, ZR3, ZR4) are subdivided using the TDMA principle into time slots (ZS, ZS1, ZS2, ZS3, ZS4),
b) the first telecommunications links are set up with priority at the first telecommunications signal frequencies in first time slots in the first time frames,
c) the second telecommunications links, which follow the first telecommunications links, are set up with priority at the stored first frequencies and in second time slots in the first time frames.

11. Arrangement according to Claim 9 or 10, characterized in that the transmitting/receiving devices (FKT), the air interfaces (PGM, ANT) and the central controllers (ZST) are designed in such a way that the first telecommunications links are set up at the telecommunications signal frequencies and in the time slots in the time frames, provided no first telecommunications signal frequencies are present.

12. Arrangement according to one of Claims 9 to 11, characterized in that the telecommunications systems are concentrated locally to form a "hot spot".

13. Arrangement according to one of Claims 9 to 12, characterized in that the telecommunications signals contain "dummy bearer" information.

14. Arrangement according to one of Claims 9 to 12, characterized in that the telecommunications signals contain "handover" control information.

15. Arrangement according to one of Claims 9 to 14, characterized in that the telecommunications systems are DECT/GAP telecommunications systems with DECT/GAP base stations as first telecommunications appliances, and with DECT/GAP mobile parts as second telecommunications appliances.

16. Arrangement according to one of Claims 9 to 14, characterized in that the telecommunications systems are GSM telecommunications systems with GSM base stations as first telecommunications appliances, and with GSM mobile parts as second telecommunications appliances.

## Revendications

1. Procédé pour améliorer le taux d'utilisation de voies de télécommunication dans des systèmes de télécommunication sans fil, asynchrones et localement concentrés, notamment des systèmes de télécommunication DECT/GAP, dans lequel des liaisons de télécommunication sans fil sont établies dans les systèmes de télécommunication entre des premiers appareils de télécommunication (BS, BS1, BS2, BS3, BS4) et des seconds appareils de télécommunication (MT, MT_{1,2}, MT_{3,4}) grâce à la transmission sans fil de signaux de télécommunication selon un procédé hybride d'accès multiple englobant le principe FDMA,
caractérisé en ce que
a) on détermine, avant l'établissement de premières liaisons de télécommunication, les niveaux des signaux de télécommunication sur les fréquences des signaux de télécommunication prédéterminées par le principe FDMA et pour des trames prédéterminées (ZR, ZR1, ZR2, ZR3, ZR4),
b) les niveaux sont déterminés jusqu'à ce que des premiers niveaux déterminés sur des premières fréquences des signaux de télécommunication et pour des premières trames ne dépassent pas des niveaux de référence prédéterminés,
c) les premières liaisons de télécommunication sont établies en priorité sur les premières fréquences des signaux de télécommunication dans les premières trames,
d) les premières fréquences et des informations sur les premières liaisons de télécommunication établies dans les premières trames sont mémorisées dans les premiers appareils de télécommunication, et
e) les secondes liaisons de télécommunication entre les premiers appareils de télécommunication (BS, BS1, BS2, BS3, BS4) et les seconds appareils de télécommunication (MT, MT_{1,2}, MT_{3,4}) succédant aux premières liaisons de télécommunication sont établies en priorité dans les premières trames sur les premières fréquences mémorisées et en tenant compte des informations.

2. Procédé selon la revendication 1, caractérisé en ce que le procédé hybride d'accès multiple englobant le principe FDMA est le procédé TDMA/FDMA, dans lequel
a) les trames (ZR, ZR1, ZR2, ZR3, ZR4) sont divisées en intervalles de temps (ZS, ZS1, ZS2, ZS3, ZS4) suivant le principe TDMA,
b) les premières liaisons de télécommunication sont établies en priorité sur les premières fréquences des signaux de télécommunication dans les premiers intervalles de temps des premières trames,
c) les secondes liaisons de télécommunication succédant aux premières liaisons de télécommunication sont établies en priorité sur les premières fréquences mémorisées et dans des seconds intervalles de temps des premières trames.

3. Procédé selon la revendication 1 ou 2, caractérisé en ce que les premières liaisons de télécommunication sont établies sur les fréquences des signaux de télécommunication et dans les trames lorsqu'aucune première fréquence des signaux de télécommunication n'est déterminée.

4. Procédé selon l'une des revendications 1 à 3, caractérisé en ce que les systèmes de télécommunication sont concentrés localement pour former un « hot spot ».

5. Procédé selon l'une des revendications 1 à 4, caractérisé en ce que les signaux de télécommunication comprennent des informations « dummy bearer ».

6. Procédé selon l'une des revendications 1 à 4, caractérisé en ce que les signaux de télécommunication comprennent des informations de commande « handover ».

7. Procédé selon l'une des revendications 1 à 6, caractérisé en ce que les systèmes de télécommunication DECT/GAP sont des systèmes de télécommunication comprenant des stations de base DECT/GAP en tant que premiers appareils de télécommunication et des parties mobiles DECT/GAP en tant que seconds appareils de télécommunication.

8. Procédé selon l'une des revendications 1 à 6, caractérisé en ce que les systèmes de télécommunication GSM sont des systèmes de télécommunication comprenant des stations de base GSM en tant que premiers appareils de télécommunication et des parties mobiles GSM en tant que seconds appareils de télécommunication.

9. Dispositif pour améliorer le taux d'utilisation de voies de télécommunication dans des systèmes de télécommunication sans fil, asynchrones et localement concentrés, notamment des systèmes de télécommunication DECT/GAP, dans lequel
a) les systèmes de télécommunication (TKS, TKS1, TKS2, TKS3, TKS4) comprennent des premiers appareils de télécommunication (BS, BS1, BS2, BS3, BS4) qui peuvent être reliés à des seconds appareils de télécommunication (MT, MT_{1,2}, MT_{3,4}) des systèmes de télécommunication grâce à la télécommunication sans fil selon un procédé hybride d'accès multiple englobant le principe FDMA,
b) les premiers appareils de télécommunication (BS, BS1, BS2, BS3, BS4) comprennent des dispositifs émetteurs/récepteurs (FKT) pour les signaux de télécommunication, des interfaces aériennes (PGM, ANT) et des commandes centrales (ZST) qui sont exécutés et reliés les uns aux autres de manière à ce que, grâce à la transmission sans fil des signaux de télécommunication selon le procédé hybride d'accès multiple englobant le principe FDMA, des liaisons de télécommunication sans fil soient établies vers les seconds appareils de télécommunication (MT, MT_{1,2}, MT_{3,4}),
caractérisé en ce que
c) les dispositifs émetteurs/récepteurs (FKT) sont pourvus de moyens de mesure (MM) qui sont exécutés de manière à ce que, avant l'établissement de premières liaisons de télécommunication, les niveaux des signaux de télécommunication soient mesurés sur des fréquences des signaux de télécommunication prédéterminées par le principe FDMA et pour des trames prédéterminées (ZR, ZR1, ZR2, ZR3, ZR4),
d) les commandes centrales (ZST) sont pourvues de moyens comparateurs (VGM) qui comparent les niveaux mesurés à un niveau de référence prédéterminé,
e) les commandes centrales (ZST) sont pourvues de moyens de commande (STM) par le biais desquels, en fonction des résultats de la comparaison, les moyens de mesure (MM) servant à mesurer les niveaux sont commandés jusqu'à ce que des premiers niveaux mesurés sur des premières fréquences des signaux de télécommunication et pour des premières trames ne dépassent pas les niveaux de référence prédéterminés,
f) les dispositifs émetteurs/récepteurs (FKT), les interfaces aériennes (PGM, ANT) et les commandes centrales (ZST) sont exécutés de manière à ce que les premières liaisons de télécommunication soient établies en priorité sur les premières fréquences des signaux de télécommunication dans les premières trames,
g) les commandes centrales (ZST) sont pourvues de mémoires (SP) dans lesquelles sont mémorisées les premières fréquences et des informations sur la première liaison de télécommunication établie dans les premières trames,
h) les dispositifs émetteurs/récepteurs (FKT), les interfaces aériennes (PGM, ANT) et les commandes centrales (ZST) sont exécutés de manière à ce que les secondes liaisons de télécommunication entre les premiers appareils de télécommunication (BS, BS1, BS2, BS3, BS4) et les seconds appareils de télécommunication (MT, MT_{1,2}, MT_{3,4}) succédant aux premières liaisons de télécommunication soient établies en priorité dans les premières trames sur les premières fréquences mémorisées et en tenant compte des informations.

10. Dispositif selon la revendication 9, caractérisé en ce que le procédé hybride d'accès multiple englobant le principe FDMA est le procédé TDMA/FDMA et les dispositifs émetteurs/récepteurs (FKT), les interfaces aériennes (PGM, ANT) et les commandes centrales (ZST) sont exécutés de manière à ce que
a) les trames (ZR, ZR1, ZR2, ZR3, ZR4) soient divisées en intervalles de temps (ZS, ZS1, ZS2, ZS3, ZS4) suivant le principe TDMA,
b) les premières liaisons de télécommunication soient établies en priorité sur les premières fréquences des signaux de télécommunication dans les premiers intervalles de temps des premières trames,
c) les secondes liaisons de télécommunication succédant aux premières liaisons de télécommunication soient établies en priorité sur les premières fréquences mémorisées et dans des seconds intervalles de temps des premières trames.

11. Dispositif selon la revendication 9 ou 10, caractérisé en ce que les dispositifs émetteurs/récepteurs (FKT), les interfaces aériennes (PGM, ANT) et les commandes centrales (ZST) sont exécutés de manière à ce que les premières liaisons de télécommunication soient établies sur les fréquences des signaux de télécommunication et dans les intervalles de temps des trames lorsqu'aucune première fréquence des signaux de télécommunication n'est présente.

12. Dispositif selon l'une des revendications 9 à 11, caractérisé en ce que les systèmes de télécommunication sont concentrés localement pour former un « hot spot ».

13. Dispositif selon l'une des revendications 9 à 12, caractérisé en ce que les signaux de télécommunication comprennent des informations « dummy bearer ».

14. Dispositif selon l'une des revendications 9 à 12, caractérisé en ce que les signaux de télécommunication comprennent des informations de commande « handover ».

15. Dispositif selon l'une des revendications 9 à 14, caractérisé en ce que les systèmes de télécommunication, en tant que systèmes de télécommunication DECT/GAP, sont formés par des stations de base DECT/GAP en tant que premiers appareils de télécommunication et des parties mobiles DECT/GAP en tant que seconds appareils de télécommunication.

16. Dispositif selon l'une des revendications 9 à 14, caractérisé en ce que les systèmes de télécommunication, en tant que systèmes de télécommunication GSM, sont formés par des stations de base GSM en tant que premiers appareils de télécommunication et des parties mobiles GSM en tant que seconds appareils de télécommunication.
